# EUROPÄISCHE PATENTSCHRIFT

(11) **EP 0 555 555 B1**
(45) Veröffentlichungstag und Bekanntmachung des Hinweises auf die Patenterteilung: **05.07.1995**
(21) Anmeldenummer: 92121905.1
(22) Anmeldetag: 23.12.1992
(51) Int. Cl.: H02G 1/12

(54) **Werkzeug zum Abisolieren eines Leiters**
Conductor stripping tool
Outil à dénuder un conducteur

(30) Priorität: 12.02.1992 DE 4204141
(43) Veröffentlichungstag der Anmeldung: 18.08.1993
(73) Patentinhaber: Weidmüller Interface GmbH & Co., D-32760 Detmold (DE)
(72) Erfinder: Undin, Hans, S-18451 Österkär (SE)
(74) Vertreter: TER MEER STEINMEISTER & PARTNER GbR

(56) Entgegenhaltungen:
- FR-A- 2 227 662
- FR-A- 2 514 960
- US-A- 4 489 490

## Beschreibung

Die Erfindung betrifft ein Werkzeug zum Abisolieren eines Leiters gemäß dem Oberbegriff des Patentanspruchs 1.

Ein derartiges Werkzeug ist bereits allgemein bekannt und enthält im Innern eines Griffelements ein stangenförmig ausgebildetes Messerstück, das sich über die gesamte Länge des Griffelements erstreckt und an seiner Spitze eine Klinge aufweist, die aus dem Griffelement heraussteht. Die Klinge ist gegenüber dem restlichen Teil des Messerstücks seitlich versetzt angeordnet, so daß sie bei Drehung des Messerstücks dessen Längsachse auf einer kreisförmigen Bahn umläuft. Ein im Griffelement angeordnetes Gegenlager dient zur Aufnahme des Leiters und liegt der klingenförmigen Spitze des Messerstücks gegenüber.

Wird der Leiter zwischen Gegenlager und klingenförmiger Spitze des Messerstücks eingeklemmt, so kann dessen Isolierung mit Hilfe der Klinge zerschnitten werden, wenn das Werkzeug in einer senkrecht zur Leiterlängsrichtung liegenden Ebene um den Leiter herumgedreht wird. Infolge der Abkröpfung der Spitze des Messerstücks liegt die Klingenebene ebenfalls In der Bewegungsebene des Werkzeugs.

Werden nach Durchtrennen der Isolation des Leiters Werkstück und Leiter In Längsrichtung des Leiters relativ zueinander bewegt, so stellt sich die Klingenebene senkrecht zu der zuvor genannten Radialebene. Dadurch werden einerseits die zerschnittenen Teile der Isolation voneinander getrennt, während andererseits die restliche Isolation auf dem Leiterende In Längsrichtung des Leiters aufgeschlitzt werden kann.

Allgemein liegt die Klingenebene immer in derjenigen Ebene, in welcher die Abbiegung bzw. Kröpfung der Spitze des stangenförmigen Messerstücks erfolgt ist.

Wie bereits erwähnt, verläuft beim bekannten Werkzeug das stangenförmige Messerstück durch das gesamte Griffelement hindurch, so daß der Austausch des Messerstücks relativ kompliziert ist. Hierzu muß nämlich das gesamte Griffelement zerlegt werden. Infolge seiner großen Länge ist das Messerstück aber auch relativ teuer. Darüber hinaus ist ein aufwendiger Arbeitsvorgang erforderlich, um das Messerstück in seinem Spitzenbereich abzubiegen.

Aus dem Dokument DE-A-3 140 193 ist ein Werkzeug zum Abisolieren eines Leiters bekannt, wobei ein Messerstück mittig in einem drehbaren Trägerkörper gehalten ist.

Der Erfindung liegt die Aufgabe zugrunde, ein Werkzeug der eingangs genannten Art zu schaffen, bei dem sich das Messerstück leichter austauschen und darüber hinaus einfacher und billiger herstellen läßt.

Die Lösung der gestellten Aufgabe ist im kennzeichnenden Teil des Patenanspruchs 1 angegeben. Vorteilhafte Ausgestaltungen der Erfindung sind in Unteransprüchen zu entnehmen.

Ein Werkzeug nach der Erfindung zeichnet sich dadurch aus, daß am Griffelement ein um die Drehachse drehbarer Trägerkörper gelagert ist, in welchem das Messerstück mit seiner Längsrichtung schräg zur Drehachse verläuft.

Das Messerstück und der Trägerkörper sind lösbar miteinander verbunden und bilden eine nur kurze Baueinheit. Der Trägerkörper ist am oberen Ende des Griffelements gelagert und läßt sich relativ leicht herausnehmen, wenn die Klinge des Messerstücks nach längerem Betrieb abgenutzt ist. Ein Austausch des Messerstücks ist daher problemlos möglich, ohne daß das Griffelement zerlegt werden muß.

Da das Messerstück schräg zur Drehachse des Trägerkörpers liegt, braucht es selbst auch nicht mehr abgebogen zu werden, so daß es als gerades stangenförmiges Stück mit relativ kurzer Länge einfach und billig herstellbar ist.

Nach einer vorteilhaften Ausgestaltung der Erfindung ist der Trägerkörper als Zylinder ausgebildet, dessen Zylinderachse die Drehachse bildet. Vorzugsweise verläuft dabei das Messerstück durch die Stirnflächen des Zylinders hindurch.

Ein zylinderförmiger Trägerkörper läßt sich in besonders einfacher Weise herstellen und gewährleistet eine gute Führung in einer entsprechend ausgebildeten Lagerhülse und damit auch eine gute Führung des Messerstücks, was die Betriebssicherheit des Werkzeugs erhöht. Da das Messerstück nur die Zylinderstirnflächen durchsetzt, stehen insbesondere die stirnseitigen Umfangsrandbereiche des Zylinders zu Führungs- und Positionierungszwecken voll zur Verfügung.

Nach einer anderen vorteilhaften Ausgestaltung der Erfindung weist das der klingenförmigen Spitze abgewandte Ende des Messerstücks radiale Ansätze auf, die in die Wandung des Trägerkörpers eingreifen. Die radialen Ansätze dienen quasi als Drehsicherung für das Messerstück, um zu verhindern, daß sich das Messerstück relativ zum Trägerkörper dreht.

Dabei kann das der klingenförmigen Spitze abgewandte Ende des Messerstücks auch als Lagerkopf ausgebildet sein, um eine möglichst reibungsarme Lagerung der aus Messerstück und Trägerkörper bestehenden Baueinheit zu gewährleisten. Der Lagerkopf überragt daher die benachbarte Stirnseite des Trägerkörpers ein wenig, um zu verhindern, daß diese Stirnseite des Trägerkörpers mit einer Unterlage in Reibkontakt steht.

Nach einer anderen vorteilhaften Weiterbildung der Erfindung weist der Trägerkörper eine Umfangsnut zur Aufnahme eines Klemmrings auf. Dieser Klemmring dient zur axialen Sicherung des Trägerkörpers in der Lagerhülse. Die Lagerhülse kann dabei starr mit dem Griffelement verbunden sein.

Vorteilhaft wird die Hülse mit einer Schraubkappe verschlossen, durch die der Kopf des Trägerkörpers hindurchragt, wobei zwischen der Schraubkappe und dem Klemmring eine den Trägerkörper umgebende Druckfeder angeordnet ist, die den Klemmring gegen eine innere Umfangsstufe der Hülse drückt.

Mit anderen Worten stützt sich die Druckfeder an der Schraubkappe ab und hält den Klemmring auf der inneren Umfangsstufe der Hülse, so daß der Trägerkörper nicht aus der Hülse herausfallen kann, da sein hinterer Ansatz, der infolge der Umfangsnut erhalten wird, den Klemmring hintergreift. Der Klemmring kann auch in Form einer Ringscheibe ausgebildet sein, die an einer Stelle eine radiale Öffnung aufweist, um im Nutbereich auf den Trägerkörper aufgeschoben werden zu können.

Trägerkörper bzw. Messerstück werden darüber hinaus durch den Klemmring nicht gegen den Boden der Hülse gepreßt, was durch eine geeignete Positionierung der Umfangsnut sichergestellt werden kann, so daß nach wie vor eine leichte Drehung des Trägerkörpers auch bei gegen die Umfangsstufe gepreßtem Klemmring möglich ist.

Trägerkörper und Hülse können aus Kunststoff bestehen und somit leicht und billig gefertigt werden.

Für den Fall einer aus Kunststoff bestehenden Hülse kann sich am Hülsenboden eine verschleißfeste Platte zur Aufnahme des Lagerkopfes des Messerstücks befinden, um einerseits die Hülse vor Schaden zu bewahren und andererseits die Reibung zwischen Lagerkopf und Hülse zu verkleinern.

An der Bodenunterseite der Hülse kann sich darüber hinaus eine weitere Druckfeder abstützen, die das Gegenlager über einen Flansch zum Griffelement drückt, wobei dann das Gegenlager die Ruheposition einnimmt. Soll ein Leiter zwischen Gegenlager und Messerstück eingeklemmt werden, so wird das Gegenlager von Hand nach oben und gegen die Kraft der weiteren Druckfeder verschoben.

Die Erfindung wird nachfolgend unter Bezugnahme auf die Zeichnung näher beschrieben. Es zeigen:
**Figur 1** einen Axialschnitt durch das Werkzeug,
**Figur 2a** einen Axialschnitt durch den Trägerkörper und eine Lagerhülse,
**Figur 2b** einen Klemmring, und
**Figuren 3a bis 3c** eine Seitenansicht, einen Axialschnitt und eine Draufsicht des Trägerkörpers.

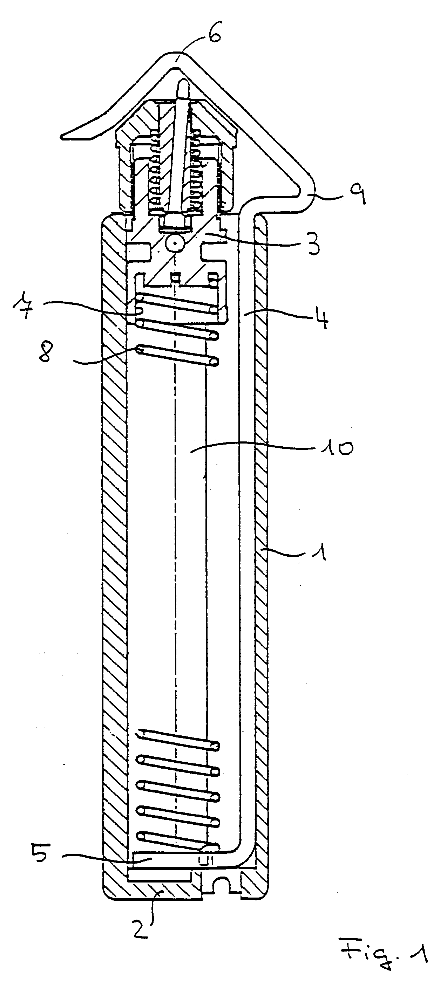

Gemäß Figur 1 enthält ein Werkzeug nach der Erfindung zum Abisolieren eines Leiters ein Griffelement 1, das aus einem länglichen Gehäuse besteht und z. B. aus Kunststoffhergestellt ist. Das untere Ende des Griffelements 1 ist mit einem Boden 2 verschlossen, während das obere Ende des Griffelements 1 offen ist. Das Griffelement 1 kann z. B. einen rechteckförmigen Außenquerschnitt aufweisen.

Am oberen und offenen Ende des Griffelements 1 befindet sich ein Hülsenelement 3, das zum Teil in das Griffelement 1 hineinragt und zu einem anderen Teil das Griffelement 1 stirnseitig nach außen überragt. Das Hülsenelement 3 ist fest mit dem Griffelement 1 verbunden, kann sich relativ zu diesem also nicht bewegen. Es kann bei Bedarf aber vom Griffelement 1 abgenommen werden.

Seitlich zum Hülsenelement 3 liegt eine Metallschiene 4, die beispielsweise rechteckförmigen Querschnitt aufweist und sich an der Innenwand des Griffelements 1 bis zum Boden 2 erstreckt. Dort ist die Metallschiene 4 zur Bildung eines Flansches 5 rechtwinklig abgebogen, wobei der Flansch 5 auf dem Boden 2 zu liegen kommt. Am oberen Ende des Griffelements 1 ist die Metallschiene 4 spitzdachartig abgewinkelt, um ein Gegenlager 6 für einen abzuisolierenden Leiter (nicht dargestellt) zu bilden. Die Dachspitze des Gegenlagers 6 kommt dabei auf der Mittel- bzw. Symmetrielinie des Hülsenelements 3 zu liegen.

Das im Griffelement 1 liegende untere Ende des Hülsenelements 3 weist eine Aufnahme 7 für eine Druckfeder 8 auf, die solang ist, daß sie gegen den am Boden 2 liegenden Flansch 5 der Metallschiene 4 drückt. Mit anderen Worten wird durch die Druckfeder 8 das Gegenlager 6 in Richtung zum Griffelement 1 gedrückt. Soll ein abzuisolierender Leiter in die Dachspitze bzw. in das Gegenlager 6 eingelegt werden, so wird dieses von Hand entgegen der Kraft der Druckfeder 8 in Längsrichtung des Griffelements 1 verschoben, und zwar unter Beaufschlagung eines seitlichen Dachansatzes 9. Beim Loslassen des Dachansatzes 9 wird dann der im Gegenlager 6 liegende Leiter gegen ein Messerstück gedrückt, das später noch genauer beschrieben wird. Zur Stabilisierung der Druckfeder 8 kann sich im Innern des Griffelements 1 ein zylinderischer Hohlkanal 10 befinden, der zur Aufnahme der Druckfeder 8 dient.

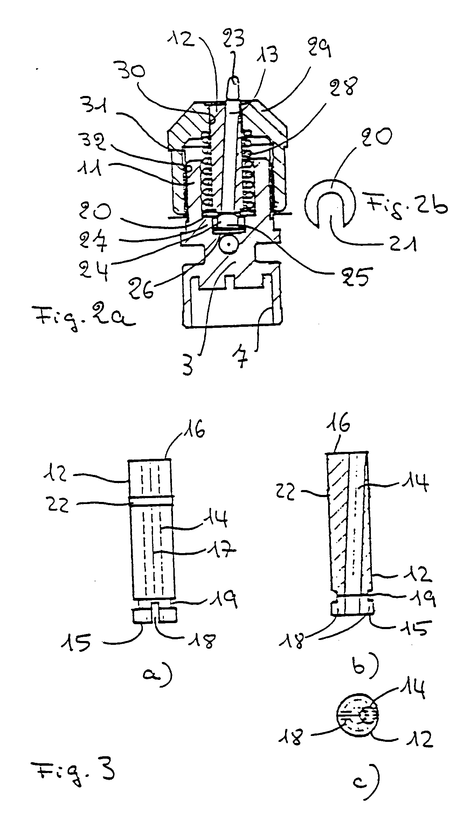

Die Figur 2a zeigt einen Axialschnitt durch das Werkzeug im Bereich des Hülsenelements 3. Das Hülsenelement 3 ist an seinem oberen und der Aufnahme 7 gegenüberliegenden Ende mit einer Hülse 11 versehen, die zur Aufnahme eines Trägerkörpers 12 für ein Messerstück 13 dient.

Der Aufbau des Trägerkörpers 12 soll nachfolgend zunächst unter Bezugnahme auf die Figuren 3a bis 3c näher erläutert werden.

Der Trägerkörper 12 besteht aus einem Kunststoffzylinder, der mit einem Innenkanal 14 versehen ist, welcher von einer unteren Stirnseite 15 des Trägerkörpers 12 zu einer oberen Stirnseite 16 des Trägerkörpers 12 verläuft. Der Innenkanal 14 ist dabei gegenüber der Zylinderachse 17 geneigt, wobei der Innenkanal 14 an der unteren Stirnseite 15 mittig beginnt und an der oberen Stirnseite 16 in der Nähe des äußeren Randbereichs des Trägerkörpers 12 endet. Im Bereich der unteren Stirnseite 15 sind darüber hinaus Radialschlitze 18 in der Umfangswandung des Trägerkörpers 12 vorhanden, die mit dem Innenkanal 14 in Verbindung stehen. Ferner weist der Trägerkörper 12 In der Nähe der unteren Stirnseite 15 eine Umfangsnut 19 auf, die zur Aufnahme eines in Figur 2b dargestellten Klemmringes 20 dient. Der Klemmring 20 weist eine einheitliche Dicke auf und läßt sich im Bereich der Nut 19 auf den Trägerkörper 12 aufschieben, wozu der Klemmring 20 eine radiale Öffnung 21 besitzt, deren Breite dem Außendurchmesser des Trägerkörpers 12 im Bereich der Nut 19 entspricht. Ferner kann an dem der oberen Stirnseite 16 zugewandten Ende des Trägerkörpers 12 ein Umfangswulst 22 vorhanden sein, der zur Führung des Trägerkörpers 12 dient.

Wie die Figur 2a erkennen läßt, befindet sich das Messerstück 13 im Innenkanal 14 des Trägerkörpers 12. Das Messerstück 13 weist eine klingenförmige Spitze 23 auf, die bis auf den Verbindungsbereich mit dem Messerstück 13 eine in einer Ebene liegende bzw. umlaufende Schneidkante besitzt. Am anderen Ende des Messerstücks 13 ist dieses zur Bildung radialer Ansätze 24 z.B. breitgequetscht. Beispielsweise liegen die klingenförmige Messerspitze 23 und die Ansätze 24 in derselben Ebene. Diese radialen Ansätze 24 greifen in die Radialschlitze 18 ein, nachdem das Messerstück 13 mit seiner Spitze 23 in den Innenkanal 14 vollständig eingeschoben worden ist, und zwar von der unteren Stirnseite 15 her. Durch die radialen Ansätze 24 wird eine Drehsicherung des Messerstücks 13 im Trägerkörper 12 erzielt. Das untere bzw. freie Ende des durch Quetschung erzielten Ansatzes bildet einen Lagerkopf 25 für das Messerstück 13 und überragt den Trägerkörper 12 ein wenig nach unten. Dieser Lagerkopf 25 ruht auf einer verschleißfesten Platte 26, die z. B. aus Stahl besteht, und die sich am Boden der Hülse 11 befindet.

Die verschleißfeste Platte 26 befindet sich in einer zentralen Ausnehmung der Hülse 11, die durch eine Umfangsstufe 27 begrenzt wird. Oberhalb der Umfangsstufe 27 erweitert sich die Hülse 11 und weist dort einen größeren Durchmesser auf. In die zentrale Ausnehmung ist der Trägerkörper 12 mit seinem unteren Teil passend eingesetzt. Der im Bereich der Nut 19 des Trägerkörpers 12 liegende Klemmring 20 kommt auf der Umfangsstufe 27 zu liegen und wird mit Hilfe einer Druckfeder 28, die den Trägerkörper 12 umgibt, gegen die Umfangsstufe 27 gedrückt. Die Druckfeder 28 stützt sich innen an einer Schraubkappe 29 ab, die eine zentrale Öffnung 30 aufweist, durch die der Trägerkörper 12 hindurchläuft. Er wird spielfrei in der zentralen Öffnung 30 geführt. Die Schraubkappe weist ein Innengewinde 31 auf, mit dem sie sich auf ein Außengewinde 32 der Hülse 11 aufschrauben läßt. Der Außendurchmesser der Druckfeder 28 stimmt dabei mit dem Innendurchmesser des oberen Teils der Hülse 11 überein, so daß die Druckfeder 28 auf diese Weise geführt wird.

Im Nachfolgenden wird beschrieben, wie die in Figur 2a dargestellte Baueinheit montiert wird.

Zunächst wird in die zentrale Öffnung der Hülse 11 des Hülsenelements 3 die verschleißfeste Platte 26 eingelegt. Dann wird auf den Trägerkörper 12, in den bereits das Messerstück 13 vollständig hineingeschoben worden ist, der Klemmring 20 aufgesteckt, und zwar im Bereich der Nut 19 des Trägerkörpers 12. Trägerkörper 12 und Klemmring 20 werden dann in die Hülse 11 eingesetzt, derart, daß die untere Stirnseite des Trägerkörpers 12 in der zentralen Öffnung der Hülse 11 und der Klemmring 20 auf der Umfangsstufe 27 zu liegen kommen. Anschließend wird die Druckfeder 28 auf den Trägerkörper 12 aufgesteckt und in die Hülse 11 eingeführt, so daß sie auf dem Klemmring 20 zu liegen kommt. Danach wird die Schraubkappe 29 aufgesetzt, wobei deren Innengewinde 31 auf das Außengewinde 32 der Hülse 11 aufgeschraubt wird. Dabei muß daraufgeachtet werden, daß der obere Teil des Trägerkörpers 12 in die zentrale Öffnung 30 eingeführt wird.

Beim Festziehen der Schraubkappe 29 drückt die Druckfeder 28 gegen den Klemmring 20, so daß der Trägerkörper 12 nicht mehr aus der Hülse 11 herausfallen kann, da der unterhalb des Klemmrings 20 liegende Teil des Trägerkörpers 12 einen größeren Durchmesser als der Innendurchmesser des Klemmrings 20 aufweist. Mit anderen Worten wird der Trägerkörper 12 durch den Klemmring 20 in der Hülse 11 gehalten. Dabei weist der unterhalb des Klemmrings 20 liegende Teil des Trägerkörpers 12 aber nur eine solche Länge auf, daß der Klemmring 20 den Trägerkörper 12 nicht gegen die verschleißfeste Platte 26 drückt. Vielmehr kann sich der Trägerkörper 12 mit dem Messerstück 23 auch dann noch frei und sehr leicht drehen, wenn die Schraubkappe 29 fest angezogen ist.

Die in Figur 2a dargestellte Baueinheit läßt sich sodann mit dem Griffelement verbinden, wobei zuvor die Druckfeder 8 eingebaut wird. Ein Austausch des Trägerkörpers 12 ist aber auch möglich, nachdem schon das Hülsenelement 3 fest mit dem Griffelement 1 verbunden ist. In diesem Fall braucht nur die Schraubkappe 29 gelöst zu werden, so daß sich dann der Trägerkörper 12 mit dem Messerstück 23 herausnehmen läßt. Auf diese Weise ist ein einfacher Austausch des Messerstücks 23 möglich, das nur aus dem abgenommenen Trägerkörper 12 herausgedrückt und durch ein anderes ersetzt zu werden braucht.

Das Messerstück 23 kann beispielsweise aus gehärtetem Stahl bestehen und eine Länge von 2 bis 2,5 cm aufweisen. Es besteht aus einem geraden, stangenförmigen Stück und läßt sich in besonders einfacher Weise herstellen.

Die Schraubkappe 29 besteht aus Metall, beispielsweise aus Messing, und ist in ihrem Spitzenbereich kegelförmig ausgebildet und mit einer Rändelung versehen.

## Patentansprüche

1. Werkzeug zum Abisolieren eines Leiters, mit
- einem Griffelement (1),
- einem stangenförmigen und griffelementseitig gelagerten Messerstück (13), das eine klingenförmige Spitze (23) aufweist, die im Abstand um eine Drehachse (17) herum bewegbar ist, welche senkrecht zu einem in Arbeitsposition liegenden Leiter steht, und
- einem am Griffelement (1) angeordneten Gegenlager (6) zur Aufnahme des Leiters, **dadurch gekennzeichnet,** daß am Griffelement (1) ein um die Drehachse (17) drehbarer Trägerkörper (12) gelagert ist, in welchem das Messerstück (13) mit seiner Längsrichtung schräg zur Drehachse (17) verläuft.

2. Werkzeug nach Anspruch 1, **dadurch gekennzeichnet,** daß der Trägerkörper (12) ein Zylinder ist, dessen Zylinderachse die Drehachse (17) bildet.

3. Werkzeug nach Anspruch 1 oder 2, **dadurch gekennzeichnet,** daß das Messerstück (13) durch die Stirnflächen (15, 16) des Zylinders (12) hindurchgeführt ist.

4. Werkzeug nach Anspruch 1, 2 oder 3, **dadurch gekennzeichnet,** daß das der klingenförmigen Spitze (23) abgewandte Ende des Messerstücks (13) radiale Ansätze (24) aufweist, die in die Wandung des Trägerkörpers (12) eingreifen.

5. Werkzeug nach Anspruch 3 oder 4, **dadurch gekennzeichnet,** daß das der klingenförmigen Spitze (23) abgewandte Ende des Messerstücks (13) als Lagerkopf (25) ausgebildet ist.

6. Werkzeug nach einem der Ansprüche 2 bis 4, **dadurch gekennzeichnet,** daß der Trägerkörper (12) eine Umfangsnut (19) zur Aufnahme eines Klemmrings (20) aufweist.

7. Werkzeug nach einem der Ansprüche 1 bis 6, **dadurch gekennzeichnet,** daß der Trägerkörper (12) aus Kunststoff besteht.

8. Werkzeug nach einem der Ansprüche 2 bis 7, **dadurch gekennzeichnet,** daß der Trägerkörper (12) in einer starr mit dem Griffelement (1) verbundenen Hülse (11) gelagert ist.

9. Werkzeug nach Anspruch 8, **dadurch gekennzeichnet,** daß die Hülse (11) mit einer Schraubkappe (29) verschließbar ist, durch die der Kopf des Trägerkörpers (12) hindurchragt, und daß zwischen der Schraubkappe (29) und dem Klemmring (20) eine den Trägerkörper (12) umgebende Druckfeder (28) angeordnet ist, die den Klemmring (20) gegen eine innere Umfangsstufe (27) der Hülse (11) drückt.

10. Werkzeug nach Anspruch 8 oder 9, **dadurch gekennzeichnet,** daß die Hülse (11) aus Kunststoff besteht.

11. Werkzeug nach Anspruch 10, **dadurch gekennzeichnet,** daß am Innenboden der Hülse (11) eine verschleißfeste Platte (26) zur Aufnahme des Lagerkopfs (25) des Messerstücks (13) liegt.

12. Werkzeug nach einem der Ansprüche 8 bis 11, **dadurch gekennzeichnet,** daß sich an der Bodenunterseite der Hülse (11) eine weitere Druckfeder (8) abstützt, die das Gegenlager (6) über einen Flansch (5) zum Griffelement (1) drückt.

## Claims

1. Tool for stripping a conductor, having
- a handle element (1),
- a cutter piece (13), which is in the form of a rod, is supported on the handle element side and has a tip (23), in the form of a blade, which can be moved around a rotation axis (17) at a distance, said rotation axis (17) is positioned vertically to a conductor being in working position, and
- an opposing bearing (6), which is arranged on the handle element (1), for holding the conductor, **characterised in that** a supporting body (12) is supported on the handle element (1), which supporting body (12) can rotate about the rotation axis (17) and in which the cutter piece (13) runs with its longitudinal direction inclined with respect to the rotation axis (17).

2. Tool according to Claim 1, **characterised in that** the supporting body (12) is a cylinder whose cylinder axis forms the rotation axis (17).

3. Tool according to Claim 1 or 2, **characterised in that** the cutter piece (13) is passed through the end surfaces (15, 16) of the cylinder (12).

4. Tool according to Claim 1, 2 or 3, **characterised in that** the end, averted from the tip (23) in the form of a blade, of the cutter piece (13) has radial attachments (24) which engage in the wall of the supporting body (12).

5. Tool according to Claim 3 or 4, **characterised in that** the end, averted from the tip (23) in the form of a blade, of the cutter piece (13) is constructed as a bearing head (25).

6. Tool according to one of Claims 2 to 4, **characterised in that** the supporting body (12) has a circumferential groove (19) for holding a clamping ring (20).

7. Tool according to one of Claims 1 to 6, **characterised in that** the supporting body (12) consists of plastic.

8. Tool according to one of Claims 2 to 7, **characterised in that** the supporting body (12) is supported in a sleeve (11) which is rigidly connected to the handle element (1).

9. Tool according to Claim 8, **characterised in that** the sleeve (11) can be sealed by a screw cap (29) through which the head of the supporting body (12) projects, and in that a compression spring (28) which surrounds the supporting body (12) and presses the clamping ring (20) against an inner circumferential step (27) on the sleeve (11) is arranged between the screw cap (29) and the clamping ring (20).

10. Tool according to Claim 8 or 9, **characterised in that** the sleeve (11) consists of plastic.

11. Tool according to Claim 10, **characterised in that** a wear-resistant plate (26) for holding the bearing head (25) of the cutter piece (13) is located on the internal base of the sleeve (11).

12. Tool according to one of Claims 8 to 11, **characterised in that** a further compression spring (8), which presses the opposing bearing (6) over a flange (5) to the handle element (1), is supported on the underneath of the base of the sleeve (11).

## Revendications

1. Outil à dénuder un conducteur, avec
- un élément poignée (1)
- un morceau de lame (13), se présentant sous forme de barre et monté du côté de l'élément poignée, présentant une pointe (23) en forme de lame, susceptible d'être déplacé à distance autour d'un axe de rotation (17), placé perpendiculairement par rapport à un conducteur monté en position de travail, et
- un contre-appui (6) disposé sur l'élément du poignée (1) destiné à recevoir le conducteur, caractérisé en ce que sur l'élément poignée (1) est monté un corps support (12) pouvant tourner autour de l'axe de rotation (17) et dans lequel s'étend le morceau de lame (13), sa direction longitudinale étant orientée obliquement par rapport à l'axe de rotation (17).

2. Outil selon la revendication 1, caractérisé en ce que le corps support (12) est un cylindre dont l'axe longitudinale constitue l'axe de rotation (17).

3. Outil selon la revendication 1 ou 2, caractérisé en ce que le morceau de lame (13) est passé à travers les faces frontales (15, 16) du cylindre (12).

4. Outil selon la revendication 1, 2 ou 3, caractérisé en ce que l'extrémité, opposée à la pointe (23) en forme de lame du morceau de lame (13), présente des appendices radiaux (24) s'engageant dans la paroi du corps support (12).

5. Outil selon la revendication 3 ou 4, caractérisé en ce que l'extrémité, opposée à la pointe (23) en forme lame du morceau de lame (13), est réalisé sous forme de tête de palier (25).

6. Outil selon l'une des revendications 2 à 4, caractérisé en ce que le corps support (12) présente une gorge périphérique (19) destinée à recevoir une bague de serrage (20).

7. Dispositif selon l'une des revendications 1 à 6, caractérisé en ce que le corps support (12) est en matière plastique.

8. Outil selon l'une des revendications 2 à 7, caractérisé en ce que corps support (12) est monté dans une douille (11) relié rigidement à l'élément poignée (1) .

9. Outil selon la revendication 8, caractérisé en ce que la douille (11) peut être obturée par un capuchon visé (29) à travers lequel passe la tête du corps support (12), et ce qu'entre le capuchon vissé (29) et la bague de serrage (20) est disposé un ressort de pression (28) entourant le corps support (12) et pressant la bague de serrage (20) contre un étagement périphérique (27) intérieur de la douille (11).

10. Outil selon la revendication 8 ou 9, caractérisé en ce que la douille (11) est en matière plastique.

11. Outil selon la revendication 10, caractérisé en ce qu'une plaque (26), résistante à l'usure et destinée à supporter la tête de palier (25) du morceau de lame (13), est montée dans le fond intérieur de la douille (11).

12. Outil selon l'une des revendications 8 à 11, caractérisé en ce que, sur la face inférieure de fond de la douille (11), prend appui un deuxième ressort de pression (8) qui repousse le contre-appui (6), par l'intermédiaire d'un rebord (5), contre l'élément poignée (1).
